# EUROPEAN PATENT SPECIFICATION

(11) **EP 2 397 741 B1**
(45) Date of publication and mention of the grant of the patent: **11.10.2017**
(21) Application number: 10740953.4
(22) Date of filing: 01.02.2010
(51) Int. Cl.: F16L 37/092

(54) **PIPE CONNECTION DEVICE**
RÖHRENANSCHLUSSVORRICHTUNG
DISPOSITIF POUR LE RACCORDEMENT DE TUBES

(30) Priority: 13.02.2009 ES 200900267 U
(43) Date of publication of application: 21.12.2011
(73) Proprietor: RELIANCE WORLDWIDE CORPORATION (EUROPE) S.L., 18370 Moraleda de Zafayona Granada (ES)
(72) Inventor: MARTINEZ MUNETA, María Luisa, E-28600 Navalcarnero (Madrid) (ES)
(74) Representative: Carpintero Lopez, Francisco
(86) International application number: PCT/ES2010/070050
(87) International publication number: WO 2010/092213

(56) References cited:
- EP-A1- 1 722 146
- EP-A1- 1 972 845
- WO-A1-2008/087227
- WO-A1-2008/087227
- DE-A1- 19 959 067
- ES-T3- 2 310 614
- US-A1- 2005 012 328
- US-B2- 7 404 581

## Description

### Object of the Invention

The present invention relates to a device for connecting pipes which allows a versatile application for rapidly and effectively connecting different types of pipes, preferably plastic pipes, by means of using a single range of accessories for joining both cross-linked polyethylene pipes and multilayer pipes, thus reducing the production and storage costs and preventing leakages in the connection of this type of pipes when working under low pressure.

### Background of the Invention

Today, there are different systems for connecting both cross-linked polyethylene pipes and multilayer pipes, the latter being formed by a plastic and aluminium material, among which include sliding sleeve, press-fitting, and push-fit.

The system for connection by means of a sliding sleeve is described in Spanish patent no. ES-2116838. Said system for connection allows joining different plastic pipe sections and comprises a metal body and also metal compression sleeves. This joining technique is based on the pressure exerted by the sliding sleeve on the pipe itself, producing the fixing between the body and the pipe, for which purpose the sleeve can adopt different configurations.

To assemble the accessories of this type, the pipe is usually cold-flared, banded on the body of the accessory and the sleeve is introduced in the pipe by means of machines exerting an axial compression force and subsequent pressing of the sleeve. In the case of the aforementioned patent pressing is not necessary due to the particular configuration of the sliding sleeve.

Another type of accessories consisting of a metal or plastic body and metal compression sleeves which are pre-assembled in the body have later on appeared in the market. The basis of the technique for joining these accessories and both cross-linked polyethylene and multilayer pipes is similar to that described above, such that the sleeve presses the pipe against the body of the accessory. However, in this case, it is necessary to perform the assembly by means of special tools exerting a radial compression force on the metal sleeve.

On the other hand, United States patent no. US-2005012328 describes a push-fit system in which the joining is through a connection accessory which, in order to assure leak-tightness, uses a joint with special features which needs a special design in relation to an annular groove in the main body where said joint is housed. The main drawback of this system is that due to the very wide tolerances of these pipes, the joint does not function correctly with any pipe, whereby small leakages occur in determined cases. Another similar pipe connection is shown in document US 7 404 581. Therefore, in the systems for connecting pipes used today for joining or connecting different cross-linked polyethylene and multilayer pipe sections the range of accessories required to be used for these pipes is different since the dimensional tolerances of the different types of pipes are not the same, with the subsequent increase of the production and storage costs it entails. Furthermore, in some cases, leakages are detected in the connections of cross-linked polyethylene and multiplayer pipes when the pipes are subjected to low-pressure working regimens of the order of 1-3 bar, especially when push-fit accessories are used, where the leakages usually occur as a consequence of irregularities or out-of-roundness in the pipe.

### Description of the Invention

The present invention relates to a low-cost and extremely versatile device for connecting pipes which allows using a single range of accessories for connecting or joining different sections of both cross-linked polyethylene pipes and multilayer pipes, considering their particular tolerances, allowing using one and the same main body and one and the same leak-tight joint for both press-fit type connections and push-fit type connections by means of the alternate use of two elements comprised by the device, which allows reducing production costs as well as preventing leakages occurring in the connection of these types of pipes when they are subjected to low-pressure working regimens of the order of 1-3 bar.

When using the device with push-fit pipes, the drawback of having to use special tools for the assembly thereof is avoided such that they are assembled more rapidly, easily and effectively than with the devices existing today. Furthermore, in the case of the invention, the assembly is manually performed by a worker without the need of using any type of mechanical compression tool, arranging one end of the pipe opposite the device and exerting a slight axial pressure.

The invention also allows assuring sufficient leak-tightness in the plastic pipe connection by means of using joints having a frustoconical cross-section which allows simplifying the design of the annular grooves located in the main body of the device, intended to house said joints. The joints of the device of the invention offer a series of advantages with respect to the current systems which, combined with the positioning of the remaining elements comprised by the device, assures the safety and the leak-tightness needed in this type of connections.

The design of the elements further allows minimizing the amount of material used in the manufacturing of the device, for which purpose some elements have a reduced thickness while at the same time their mechanical properties are assured. With respect to the current systems for connection, the invention allows reducing the size of the device and therefore the volume at the point of connection between the pipe and device for the purpose of facilitating the embedding of the pipe.

For its use according to push-fit systems, the device for connecting pipes proposed by the invention comprises a main body having a configuration of revolution, at least one locking element, at least one sleeve and at least one leak-tight joint having a frustoconical cross-section.

The main body is the connector itself of the different pipe sections and can be rectilinear, T-shaped, in the shape of a 90º elbow or it can be a distributor or any other accessory used for coupling pipe sections, at least one of its branches incorporating an annular recess configured for housing a leak-tight joint on which the pipe radially presses.

The inner diameter of the pipe is fitted to the outer diameter of the main body. It is furthermore contemplated that the main body comprises at least one lower annular flange and an upper annular flange which allow bayonet or pressure coupling a locking element and a sleeve which are preferably pre-assembled on the main body. Thus, a first tubular housing configured for housing the corresponding end of the pipe is defined between the main body and the locking element.

It is also contemplated that the main body comprises a plurality of small annular ribs located along the length of at least one free end or nipple configured to reinforce the attachment of the pipe in the area where the connected pipe section is supported, which allows achieving a greater adherence of the pipe to the device. The nipple has at least one annular recess configured for housing a joint having a frustoconical cross-section. The possibility of the free end of at least one nipple having outer conical flanges in the form of saw teeth with an inclination such that the insertion of the pipe is favored for the purpose of increasing the adherence between the pipe and the main body of the device is contemplated.

Each locking element comprises a plurality of longitudinal flaps the final ends of which are formed as operatively oriented flanges to favor the insertion of the pipe, such that they tend to be anchored on the outer surface of the pipe thus preventing it from disconnecting when it is subjected to the working pressure of the fluid circulating therein. In an opposite area in the rear outer part, each locking element has a plurality of longitudinal flanges configured for maintaining the locking element in the center in relation to the device, which allows the locking element to always be maintained centered in its position inside the device even though it leaves its initial position, preventing it from blocking and hindering the introduction of the pipe when connecting.

In said rear part, the locking element comprises a plurality of rear longitudinal grooves for the purpose of allowing a better fitting with the main body. Said rear longitudinal grooves allow giving more flexibility to the part, such that upon introducing the locking element in its position, they allow a greater opening of the rear part, facilitating the insertion of this element in its position.

On the other hand, the sleeve acts as an attachment element for attaching the device, preventing the main body and locking element from decoupling from the pipe. Each sleeve is coupled on the upper annular flange of the main body and the insertion angle can range between 45º and 90º. The sleeve has a frustoconical shape in a final inner area for the purpose of juxtaposing it, in said area, to the action exerted by the locking element and thus favoring the locking of the locking element on the outer wall of the pipe.

The leak-tight joint has a frustoconical configuration and has a determined position such that it favors the insertion of the pipe. On its inner surface each joint has at least one inner flange preferably having semicircular cross-section configured to completely ensure the leak-tightness of the assembly and to prevent the winding of the joint when the pipe is not correctly beveled. As a result of their special configuration, the joints absorb a wide range of tolerances of the cross-linked polyethylene and multilayer pipes, which allows using the same joints for connecting different types of pipes.

It is contemplated that the aforementioned main body, the joints, the locking elements and the sleeves are factory pre-assembled, forming a single assembly allowing the insertion of each of the free ends of the pipes to be connected, being located in the first tubular housings defined between the nipples and the locking elements,

Therefore, a fundamental advantage of the invention compared to the systems of the state of the art is that the assembly times are significantly reduced by up to 80% as the use of mechanical tools is not required because the device allows a manual assembly of the pipes by simply arranging them opposite the device and exerting a slight axial pressure on the pipes.

Another improvement with respect to the systems of the state of the art is that the configuration of the nipples and of the sleeve allow correcting the dimensional irregularities or out-of-roundness that tend to be common in this type of plastic pipes, especially in the case of cross-linked polyethylene pipes, whereby leakages which are common when the pipes are subjected to low-pressure regimens are avoided.

By means of studying the stresses withstood by the device and the stress concentration points, a design of the device that is not as bulky as the accessories of the state of the art has been achieved, whereby at the connection point, the outer diameter of the device once assembled is not much greater than the outer diameter of the pipe, preferably between 30-45% of the outer diameter of the pipe, which considerably facilitates the embedding of the installations in partitions and the like without the need to widen the chases of the partitions in the junction areas like what happens with current systems, with the subsequent optimization of the amount of material to be used and therefore a significant raw material saving.

For its use according to press-fit systems, the device also comprises the same main body and the same leak-tight joint which in this case is push-fit, and additionally a preferably stainless steel pressure sleeve.

As in the case of push-fitting, the main body is the connector itself and can be rectilinear, T-shaped, in the shape of a 90º elbow, or is a distributor or any other accessory used for coupling pipes, at least one if its branches incorporating an annular recess configured for housing a leak-tight joint on which the pipe radially presses, such that the inner diameter of the pipe is fitted to the outer diameter of the main body.

In the case of press-fitting, the upper annular flange of the main body is configured for allowing the coupling of the pressure sleeve such that said pressure sleeve is pressed once the device is positioned in the pipe with a radial compression tool.

The small annular ribs of the nipple, in addition to the optional outer conical flanges at the free ends of the nipple, serve to better adhere the pipe to the main body when compressing the pressure sleeve.

In terms of the leak-tight joint, it is the same as that used for the push-fit system; its cross-section is frustoconical and has a determined position such that the cone is placed such that the insertion of the pipe is favored; its inner surface has at least one inner flange preferably having semicircular cross-section, ensuring the leak-tightness of the assembly. With this joint design the winding thereof is prevented, especially when the pipe is not correctly beveled.

As in the case of push-fitting, it is contemplated that the elements of the device are factory pre-assembled. In this case, when connecting two pipes, the pipe is introduced through a tubular housing which is defined between the nipple and the pressure sleeve, then a radial compression being performed on said pressure sleeve with a suitable tool such that the pipe is pressed against the nipple of the main body and the annular ribs of said nipple leading to the pipe not being disconnected due to the roughness of the surface, the leak-tightness of the connection being perfectly assured by means of the joint having a frustoconical cross-section.

In terms of application, the possibility of using a single range of accessories for connecting both the cross-linked polyethylene pipes and multilayer pipes is a very significant advancement with the aforementioned advantages it entails.

On the other hand, the possibility of having a system that can be used both for press-fit systems and push-fit systems, changing the elements which are coupled to one and the same main body with the same type of leak-tight joint, is also an innovative aspect with respect to the current existing systems.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows an elevational view of an embodiment having a rectilinear configuration with two nipples of the main body usable both in press-fit systems and in push-fit systems, wherein said main body is configured for connecting two pipe sections in the particular case in which said sections are intended for coupling coaxially.
Figure 2 shows an elevational view of an embodiment variant of the main body depicted in Figure 1 comprising six radial reinforcing ribs between the central ring and the upper annular flange.
Figure 3 shows an elevational view of a embodiment variant of the main body depicted in Figure 1 comprising two outer conical flanges located at the free ends of the nipples.
Figure 4 shows an elevational view of a embodiment variant of the main body depicted in Figure 1 having an elbow configuration such that the main body is configured for connecting two pipe sections in the particular case in which said sections are intended for a 90º coupling.
Figure 5 shows a longitudinal section of an embodiment of the leak-tight joint having a frustoconical cross-section in which two inner flanges having a semicircular cross-section located in the inner surface can be seen.
Figure 6 shows a longitudinal section of a variant of the joint depicted in Figure 5 in which the inner surface is planar.
Figure 7 shows a longitudinal section of the locking element usable in push-fit systems.
Figure 8 shows a perspective view of the locking element depicted in Figure 7.
Figure 9 shows a longitudinal section of the sleeve acting as an attachment element for attaching the device in push-fit systems.
Figure 10 shows a longitudinal section of the complete device connected in one of its branches to a pipe section according to a push-fit system.
Figure 11 shows a longitudinal section of the pressure sleeve according to a press-fit system.
Figure 12 shows a longitudinal section of the complete device connected in one of its branches to a pipe section according to a press-fit system.

### Preferred Embodiment of the Invention

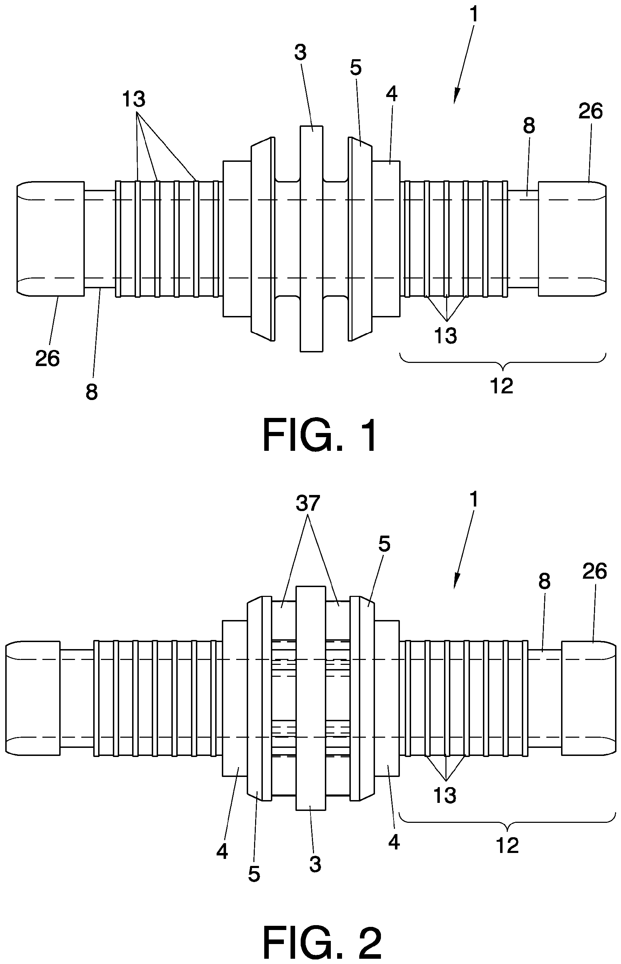

In view of the described drawings it can be observed how in one of the possible embodiments of the invention, the device for connecting pipes according to a push-fit system proposed by the invention comprises a main body (1) which in the embodiment depicted in Figures 1 to 3 and 10 has a rectilinear configuration, such that the device is configured for the coaxial coupling of two pipe sections (2).

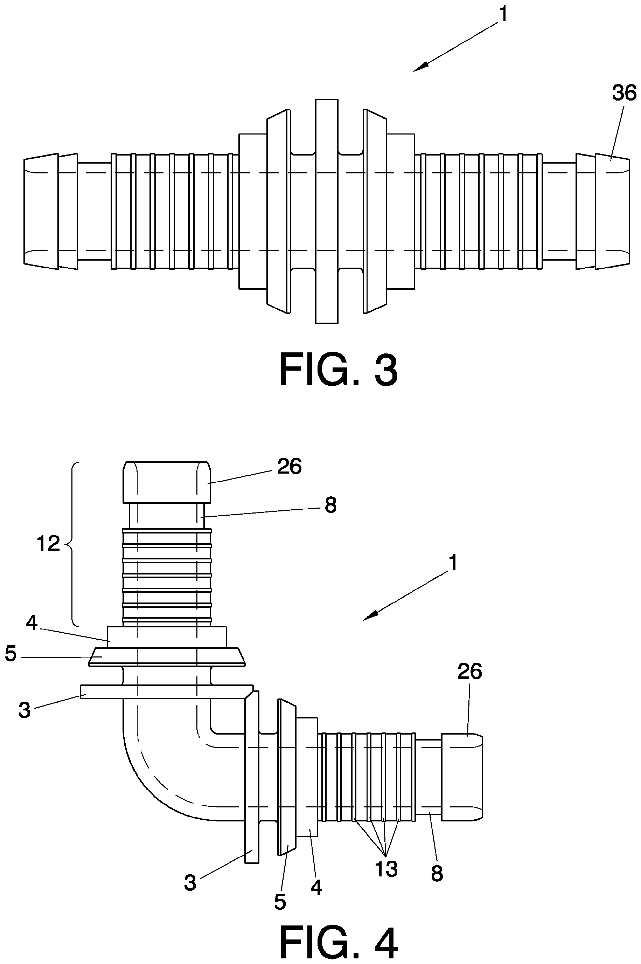

In the embodiment depicted in Figure 4, the main body (1) has a 90º elbow configuration such that said coupling is not done coaxially.

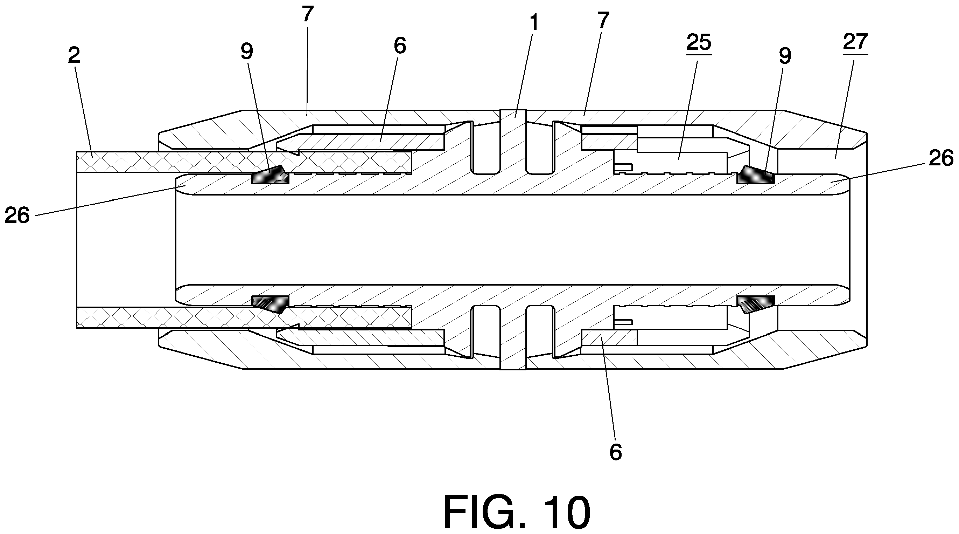

In any case, the main body (1) comprises a central ring (3) at the sides of which there is established an upper annular flange (5) configured for axially retaining a sleeve (7), followed by a lower annular flange (4) configured for axially retaining a locking element (6) as seen in Figure 10 by means of pressure coupling to the main body (1).

For each connection, the main body (1) comprises an end or nipple (12) configured for externally receiving in a tight-fit manner a pipe section (2) to be connected. Said nipples (12) have a cylindrical configuration and comprise a plurality of small annular ribs (13) uniformly distributed along said nipples (12). Each nipple (12) also comprises at least one annular recess (8) configured for housing a joint (9) which allows assuring the leak-tightness in the connection.

According to the embodiment depicted in Figure 3, the nipples (12) comprise at their free ends (26) two outer conical flanges (36) in the form of saw teeth (36) configured to further favor the attachment of the pipe (2) once the device is coupled

On the other hand, according to the embodiment depicted in Figure 2, the main body (1) comprises six radial reinforcing ribs (37) located at each side between the central ring (3) and the upper annular flanges (5).

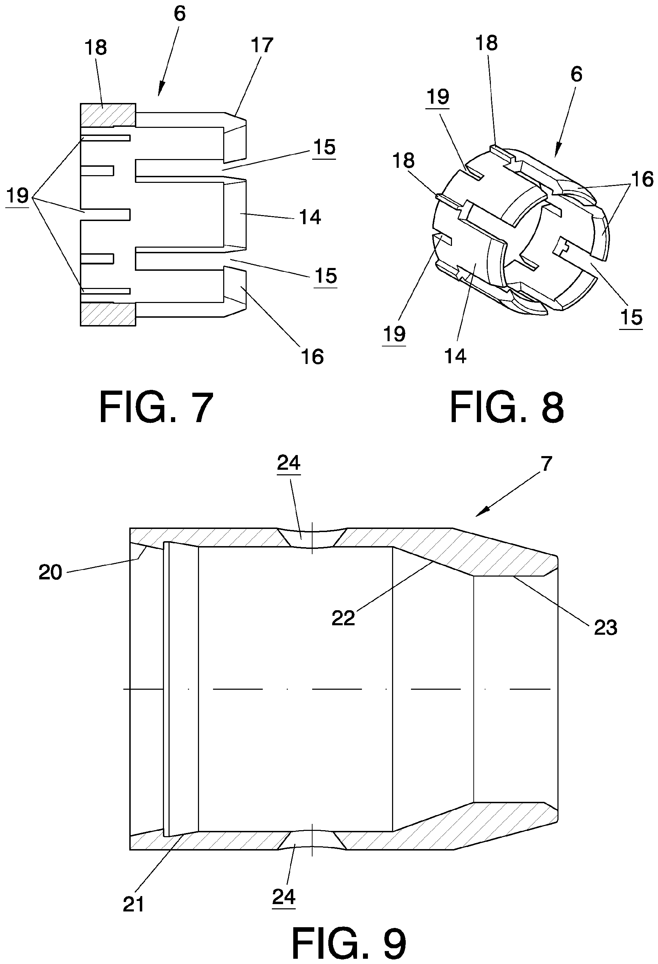

As can be seen in Figures 7 and 8, each locking element (6) has a general cylindrical configuration and comprises a plurality of longitudinal flaps (14) formed at a front end by a plurality of radially distributed longitudinal grooves (15) along the circumference of the locking element (6) intended for favoring the flexibility of this part. The final ends (16) of the longitudinal flaps (14) of the locking element (6) have an inwardly-oriented hook shape for the purpose of achieving the necessary anchoring on the outer surface of the pipe. An outer area (17) of the final ends (16) of the locking element (6) in turn has a frustoconical configuration to favor its arrangement opposite a frustoconical area (22) inside the sleeve (7) such that when the pipe (2) is subjected to pressure, said pressure tends to decouple the pipe (2) from the nipple (12) such that the locking element (6) is displaced integrally with the pipe (2), the outer areas (17) of the final ends (16) contacting the frustoconical area (22) of the sleeve (7), such that the opposing arrangement of both surfaces by virtue of the inclination thereof causes the locking element (6) to be radially interlocked in the pipe (2), preventing decoupling.

In a rear outer part of the locking element (6) opposite the previously defined front part, the locking element (6) comprises a plurality of longitudinal flanges (18) configured for allowing the locking element (6) to be maintained centered at all times once placed in its service position in the assembly formed by the complete device. The locking element (6) in said rear part further comprises a plurality of rear longitudinal grooves (19) configured for allowing a better fit of the locking element (6) in its housing on the lower annular flange (4) of the main body (1), thus covering a greater range of dimensional tolerances of pipes (2) and making the function thereof more effective.

The sleeve (7) depicted in Figure 9 has a general cylindrical configuration and comprises an inlet cone (20) configured for facilitating its insertion by pressure into the main body (1). Next to the inlet cone (20) the sleeve (7) comprises an annular housing (21) configured for receiving, i.e., for the upper annular flange (5) of the main body (1) to be inserted therein. The final inner part of the sleeve (7) opposite the inlet cone (20) comprises a frustoconical area (22) configured for preventing the decoupling between the pipe (2) and the device followed by a planar area (23) configured for forming the pipe (2) in the event that it has irregularities or out-of-roundness, for which purpose said planar area (23) acts on the pipe section (2) which is in a second tubular housing (27) defined between said planar area (23) and the free end (26) of the nipple (12).

The sleeve (7) also comprises at least one hole (24) that can adopt different configurations, the function of which consists of allowing verifying that the pipe (2) has been introduced up to the end of the main body (1) of the device.

According to a preferred embodiment of the invention, the complete and assembled device comprises a main body (1), two joints (9), two locking elements (6) and two sleeves (7). All of these elements are factory pre-assembled on the main body (1) as depicted in Figure 10, a first tubular housing (25) being defined between each locking element (6) and each nipple (12) of the main body (1) in which the corresponding pipe sections (2) are inserted by pressure, such that the leak-tightness of the connection is perfectly assured with the joints (9) which are coupled in the planar-base annular recesses (8) of each nipple (12).

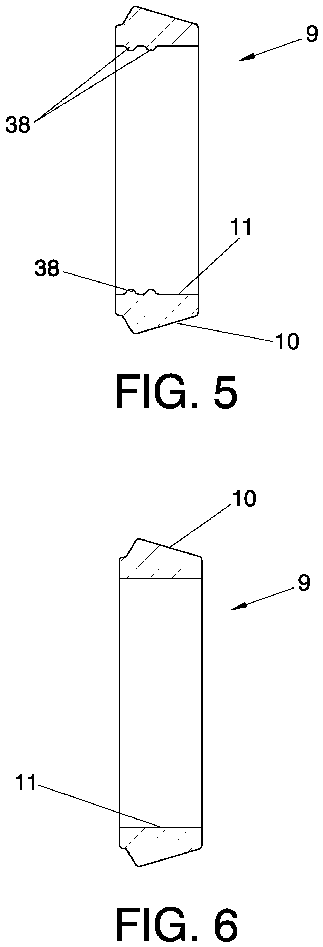

As can be seen in Figures 5 and 6, the joints (9) have a frustoconical cross-section such that they comprise an inclined outer surface (10) configured for being in contact with the pipe (2), facilitating their insertion into the device such that once the joint (9) is placed, the entrance of the pipe (2) is favored even though the latter are not correctly beveled. Each joint (9) comprises a planar inner surface (11) configured for being in contact with the base of the annular recess (8). In the embodiment depicted in Figure 5, the inner surface (11) of the joint (9) comprises two inner flanges (38) having a semicircular cross-section such that when the pipe (2) is introduced, radial pressure is exerted on the joint (9) and the inner flanges (38) located in the inner surface (11) thereof are adhered to all the points of the base of the annular recess (8), assuring complete leak-tightness of the connection. Furthermore, the particular configuration of the joints (9) prevents the winding of said joints (9) upon introducing the pipe section (2), whereby a greater range of tolerances of pipe (2) is covered, being able to absorb the tolerances of both cross-linked polyethylene pipes and multilayer pipes.

Once each pipe section (2) has been introduced into the first tubular housing (25), the pipe (2) is axially retained against the effects of the inner pressure exerted by the fluid circulating therein and which tend to lead to axial decoupling. The axial retention is perfectly ensured by the radial force exerted by the locking element (6) on the outer surface of the pipe (2) and is imposed by the opposing arrangement of the cone frustum of the outer area (17) of the final ends (16) of the locking element (6) in collaboration with the inner frustoconical area (22) of the sleeve (7). As a result of said opposing arrangement and of the particular configuration of the final ends (16) of the locking element (6), said final ends (16) tend to be interlocked in the outer wall of the pipe (2) given an axial force in the direction opposite the direction of the connection or insertion of the pipe (2), i.e., given a force that tends to decouple the pipe (2) with respect to the main body (1). For the correct operation of the device and as a result of said force, the locking element (6) must leave its initial position when the pipe (2) is subjected to the working pressure to achieve the opposing arrangement between the frustoconical area (22) of the sleeve (7) and the outer area (17) of the final ends (16) of the locking element (6), which is achieved in collaboration with the particular configuration of the rear part of the locking element (6), i.e., by means of the rear longitudinal grooves (19) which support the coupling area in a flexible manner and favor the aforementioned movement.

The annular housing (21) of the sleeve (7) in turn is intended to allow the coupling of the sleeve (7) in the upper annular flange (5) of the main body (1), such that the expansions and shrinkages that can take place both in the service regimen, i.e., during its normal operation, and in temperature cycle tests to which these installations are subjected, do not generate residual stresses in the device which could destroy the connection.

To counteract possible leakages that could occur at low working pressures as a result of irregularities or out-of-roundness present in this type of pipes (2), the final end (26) of the nipples (12) has a planar area coinciding with the inner planar area (23) of the sleeve (7), defining a second tubular housing (27) which due to its dimensions is configured to form the pipe (2) to be connected, especially if the latter is oval-shaped, for it to have a transverse circular cross-section, eliminating said out-of-roundness.

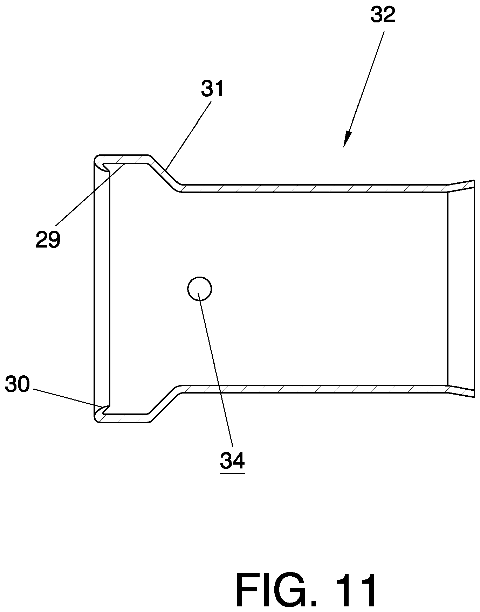

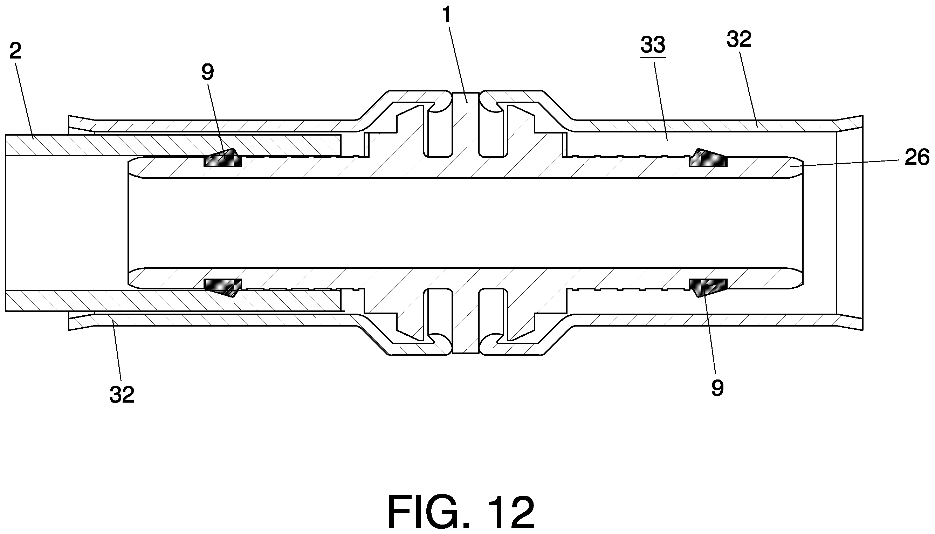

On the other hand, the device for connecting pipes according to a press-fit system proposed by the invention comprises the same main body (1) and the same joints (9) as depicted in Figures 11 to 12.

According to the present embodiment, the main body (1) has a rectilinear configuration since this device is intended for the coaxial coupling of two pipe sections (2), even though as in the case of push-fitting, said main body (1) can also adopt an elbow configuration, be T-shaped, cross-shaped, etc., depending on the type of connection to be made.

In the case of press-fitting, the upper annular flange (5) is configured for retaining a pressure sleeve (32) depicted in Figure 11, whereas the lower annular flange (4) of the main body (1) is covered by said pressure sleeve (32).

The pressure sleeve (32) has a general cylindrical configuration with a coupling area with a diameter greater than the other and it comprises an inner annular groove (29) configured for being inserted by pressure into the upper annular flange (5) of the main body (1). To favor its insertion, the pressure sleeve (32), in correspondence with said inner annular groove (29), has a conical area (30).

Between the pressure sleeve (32) and the main body (1) there is defined a tubular housing (33) configured for receiving and housing an end of the pipe (2) to be connected. The pressure sleeve (32) comprises at least one hole (34) which can adopt different configurations the function of which is to allow verifying that the pipe (2) has been introduced up to the end of the main body (1) of the device.

Once each pipe section (2) has been introduced into its corresponding tubular housing (33), radial compression is performed with a mechanical tool on the pressure sleeve (32), perfect leak-tightness favored by the joint (9) being assured. The axial retention is perfectly assured since in the radial fitting, the pipe (2) is pressed on the nipple (12) of the main body (1) and the joint (9). The radial ribs (13) of the nipple (12) favor the attachment of the pipe (2) in the pressing since they provide sufficient roughness as to not decouple the pipe (2). As in the case of push-fitting, the nipple (12) can comprise outer conical flanges (36) in the form of saw teeth at the free end (26) of the nipple (12) for the purpose of further favoring the attachment of the pipe (2) once the pressing of the device has ended.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Device for connecting pipes, **characterized in that** it comprises:
- a main body (1) comprising at least one cylindrical nipple (12) configured for externally receiving in a tight-fit manner a plastic pipe section (2),
- at least one joint (9), and
- at least one sleeve (7) or at least one pressure sleeve (32),
wherein each nipple (12) of the main body (1) comprises at least one annular recess (8) configured for housing the joint (9), the joint (9) having a frustoconical cross-section comprising an inclined outer surface (10) configured for being in contact with the pipe (2) and a planar inner surface (11) configured for being in contact with the annular recess (8), wherein said main body (1) comprises a central ring (3) at the sides of which there is established at least one upper annular flange (5) configured for axially retaining a sleeve (7) when the pipe (2) is push-fit, or a pressure sleeve (32) when the pipe (2) is press-fit, the inner surface (11) of said at least one joint (9) further comprising at least one inner flange (38) having semicircular cross section.

2. Device for connecting pipes according to claim 1, wherein each upper annular flange (5) is followed by a lower annular flange (4) configured for axially retaining a locking element (6) by means of pressure coupling to the main body (1).

3. Device for connecting pipes according to claim 2, wherein each locking element (6) comprises a plurality of longitudinal flaps (14) formed at a front end by a plurality of radially distributed longitudinal grooves (15), wherein final ends (16) of the longitudinal flaps (14) have an inwardly-oriented hook shape and an outer area (17) of the final ends (16) has a frustoconical configuration.

4. Device for connecting pipes according to any of claims 2 and 3, wherein in a rear outer part, opposite the front part, each locking element (6) comprises a plurality of longitudinal flanges (18) and a plurality of rear longitudinal grooves (19).

5. Device for connecting pipes according to any of the preceding claims, wherein each sleeve (7) comprises an inlet cone (20) configured for facilitating its insertion by pressure into the main body (1), followed by an annular housing (21) configured for receiving the upper annular flange (5) of the main body (1), wherein a final inner part of the sleeve (7) opposite the inlet cone (20) comprises a frustoconical area (22) followed by a planar area (23) configured for acting on a pipe section (2) which is in a second tubular housing (27) defined between said planar area (23) and the free end (26) of a nipple (12).

6. Device for connecting pipes according to any of claims 2 to 5, comprising a main body (1), two joints (9), two locking elements (6) and two factory pre-assembled sleeves (7), a first tubular housing (25) being defined between each locking element (6) and each nipple (12) in which the corresponding pipe sections (2) are inserted by pressure.

7. Device for connecting pipes according to claim 1, wherein each pressure sleeve (32) comprises an inner annular groove (29) located in an area with larger diameter configured for being inserted into an upper annular flange (5) of the main body (1) by pressure, a tubular housing (33) configured for receiving and housing an end of the pipe (2) to be connected being defined between said pressure sleeve (32) and the main body (1).

## Patentansprüche

1. Vorrichtung zur Verbindung von Rohren, **gekennzeichnet durch**:
- einen Hauptkörper (1), der mindestens einen zylindrischen Stutzen (12) umfasst, der konfiguriert ist, um einen Abschnitt eines Plastikrohres (2) außen formschlüssig zu empfangen,
- mindestens eine Verbindung (9), und
- mindestens eine Hülse (7) oder zumindest eine Druckhülse (32),
wobei jeder Stutzen (12) des Hauptkörpers (1) mindestens eine ringförmige Aussparung (8) umfasst, die konfiguriert ist, um die Verbindung (9) zu beinhalten,
wobei die Verbindung (9) einen kegelstumpfförmigen Querschnitt hat und eine geneigte äußere Fläche (10) umfasst, die konfiguriert ist, um mit dem Rohr (2) in Kontakt zu sein, und eine plane innere Fläche (11) umfasst, wobei die innere Fläche (11) konfiguriert ist, um mit der ringförmigen Aussparung (8) in Kontakt zu sein,
wobei genannter Hauptkörper (1) einen zentralen Ring (3) umfasst, an dessen Seiten zumindest ein oberer ringförmiger Flansch (5) arrangiert ist,
wobei der ringförmige Flansch (5) konfiguriert ist, um, wenn das Rohr (2) eine Steckverbindung hat, eine Hülse (7) axial zu sichern, oder, um, wenn das Rohr (2) eine Presspassung hat, eine Drückhülse (32) axial zu sichern,
wobei die innere Fläche (11) der genannten mindestens einen Verbindung (9) ferner mindestens einen inneren Flansch (38) mit halbrundem Querschnitt hat.

2. Vorrichtung zur Verbindung von Rohren gemäß Anspruch 1, wobei jeder obere ringförmige Flansch (5) von einem unteren ringförmigen Flansch (4) gefolgt ist, der konfiguriert ist, um ein Verschlusselement (6) mittels Druckkopplung an dem Hauptkörper (1) in Axialrichtung zu sichern.

3. Vorrichtung zur Verbindung von Rohren gemäß Anspruch 2, wobei jedes Verschlusselement (6) eine Mehrzahl an Längszähnen (14) umfasst, die an einem vorderen Ende durch eine Mehrzahl von radial verteilten Längsrillen (15) gebildet werden, wobei äußerste Enden (16) der Längszähne (14) eine nach Innen gerichtete Hakenform haben und ein äußerer Bereich (17) der äußersten Enden (16) eine kegelstumpfförmige Konfiguration hat.

4. Vorrichtung zur Verbindung von Rohren gemäß Ansprüchen 2 und 3, wobei in einem hinteren äußeren Teil, gegenüber von dem vorderen Teil, jedes Verschlusselement (6) eine Mehrzahl an Längsflanschen (18) und eine Mehrzahl an hinteren Längsrillen (19) umfasst.

5. Vorrichtung zur Verbindung von Rohren gemäß einem der vorhergehenden Ansprüche, wobei jede Hülse (7) einen Zugangstrichter (20) umfasst, der konfiguriert ist, um seine Einführung in den Hauptkörper (1) durch Druck zu vereinfachen, gefolgt von einem ringförmigen Gehäuse (21), das konfiguriert ist, um den oberen ringförmigen Flansch (5) des Hauptkörpers (1) zu empfangen,
wobei ein am weitest außen liegender, innerer Teil der Hülse (7), gegenüber von dem Zugangstrichter (20), einen kegelstumpfförmigen Bereich (22) umfasst, gefolgt von einem planen Bereich (23), der konfiguriert ist, um auf den Rohrabschnitt (2) zu wirken, der in einem zweiten tubulären Gehäuse (27), zwischen genanntem planen Bereich (23) und dem freien Ende (26) eines Stutzens (12), definiert ist.

6. Vorrichtung zur Verbindung von Rohren gemäß Ansprüchen 2 bis 5, umfassend: einen Hauptkörper (1), zwei Verbindungen (9), zwei Verschlusselemente (6) und zwei werksvorgefertigte Hülsen (7), wobei ein erstes tubuläres Gehäuse (25) zwischen jedem Verschlusselement (6) und jedem Stutzen (12) definiert ist, in welches die korrespondierenden Rohrabschnitte (2) durch Druck eingesetzt werden.

7. Vorrichtung zur Verbindung von Rohren gemäß Anspruch 1, wobei jede Druckhülse (32) Folgende umfasst:
eine innere ringförmige Rille (29), die in einem Bereich mit größerem Durchmesser vorhanden ist, konfiguriert, um in einen oberen kreisförmigen Flansch (5) des Hauptkörpers (1) durch Druck eingesetzt zu werden,
ein tubuläres Gehäuse (33), konfiguriert, um ein Ende des zu verbindenden Rohres (2) zu empfangen und zu beinhalten, welches zwischen genannter Druckhülse (32) und dem Hauptkörper (1) definiert ist.

## Revendications

1. Dispositif pour le raccordement de tubes, **caractérisé en ce qu'**il comprend :
- un corps principal (1) comprenant au moins un mamelon cylindrique (12) configuré pour recevoir de manière externe en a justement étroit une section de tube en plastique (2),
- au moins un joint (9), et
- au moins un manchon (7) ou au moins un manchon de pression (32),
dans lequel chaque mamelon (12) du corps principal (1) comprend au moins un creux annulaire (8) configurée pour loger le joint (9), le joint (9) ayant une section transversale tronconique comprenant une surface extérieure inclinée (10) configurée pour être en contact avec le tube (2) et une surface intérieure planaire (11) configurée pour être en contact avec le creux annulaire (8), dans lequel ledit corps principal (1) comprend un anneau central (3) sur les côtés duquel est établie au moins une bride annulaire supérieure (5) configurée pour retenir axialement un manchon (7) lorsque le tube (2) fait l'objet d'un ajustage poussé, ou un manchon de pression (32) lorsque le tube (2) fait l'objet d'un ajustage serré, la surface intérieure (11) dudit au moins un joint (9) comprenant en outre au moins une bride intérieure (38) ayant une section transversale semi-circulaire.

2. Dispositif pour le raccordement de tubes selon la revendication 1, dans lequel chaque bride annulaire supérieure (5) est suivie d'une bride annulaire inférieure (4) configurée pour retenir axialement un élément de verrouillage (6) au moyen d'un couplage de pression avec le corps principal (1).

3. Dispositif pour le raccordement de tubes selon la revendication 2, dans lequel chaque élément de verrouillage (6) comprend une pluralité de pattes longitudinales (14) formées au niveau d'une extrémité avant par une pluralité de rainures longitudinales réparties radialement (15), dans lequel des extrémités finales (16) des pattes longitudinales (14) présentent une forme de crochet orienté vers l'intérieur et une zone extérieure (17) des extrémités finales (16) présente une configuration tronconique.

4. Dispositif pour le raccordement de tubes selon l'une quelconque des revendications 2 et 3, dans lequel dans une partie extérieure arrière, à l'opposé de la partie avant, chaque élément de verrouillage (6) comprend une pluralité de brides longitudinales (18) et une pluralité de rainures arrières longitudinales (19).

5. Dispositif pour le raccordement de tubes selon l'une quelconque des revendications précédentes, dans lequel chaque manchon (7) comprend un cône d'entrée (20) configuré pour faciliter son insertion par pression dans le corps principal (1), suivi d'un logement annulaire (21) configuré pour recevoir la bride annulaire supérieure (5) du corps principal (1), dans lequel une partie intérieure finale du manchon (7) opposée au cône d'entrée (20) comprend une zone tronconique (22) suivie d'une zone planaire (23) configurée pour agir sur une section de tube (2) qui est dans un second logement tubulaire (27) défini entre ladite zone planaire (23) et l'extrémité libre (26) d'un mamelon (12).

6. Dispositif pour le raccordement de tubes selon l'une quelconque des revendications 2 à 5, comprenant un corps principal (1), deux joints (9), deux éléments de verrouillage (6) et deux manchons pré-assemblés en usine (7), un premier logement tubulaire (25) étant défini entre chaque élément de verrouillage (6) et chaque mamelon (12), dans lequel les sections de tube (2) correspondantes sont insérées par pression.

7. Dispositif pour le raccordement de tubes selon la revendication 1, dans lequel chaque manchon de pression (32) comprend une rainure annulaire intérieure (29) située dans une zone de diamètre plus important configurée pour être insérée dans une bride annulaire supérieure (5) du corps principal (1) par pression, un logement tubulaire (33) configuré pour recevoir et loger une extrémité du tube (2) à raccorder étant défini entre ledit manchon de pression (32) et le corps principal (1).
